# EUROPÄISCHE PATENTSCHRIFT

(11) **EP 1 508 499 B1**
(45) Veröffentlichungstag und Bekanntmachung des Hinweises auf die Patenterteilung: **13.09.2006**
(21) Anmeldenummer: 04103642.7
(22) Anmeldetag: 28.07.2004
(51) Int. Cl.: B62D 5/09, B62D 5/00

(54) **Lenksystem für ein Kraftfahrzeug mit einer Servolenkeinrichtung**
Steering system for a vehicle with a power steering device
Système de direction pour un véhicule avec un dispositif de direction assistée

(30) Priorität: 16.08.2003 DE 10337635; 19.08.2003 DE 10337954; 15.01.2004 DE 102004002248
(43) Veröffentlichungstag der Anmeldung: 23.02.2005
(73) Patentinhaber: Bayerische Motoren Werke Aktiengesellschaft, 80809 München (DE)
(72) Erfinder: Müller, Steffen, 81669 München (DE); Fleck, Reidar, 80995 München (DE); Koehn, Philip, 80639 München (DE); Kolbeck, Klaus, 82319 Starnberg (DE); Brandmaier, Jochen, 81371 München (DE); Schott, Stefan, 85737 Ismaning (DE)

(56) Entgegenhaltungen:
- WO-A-03/072418
- US-A- 6 076 627
- US-B1- 6 285 936
- US-B1- 6 502 661

## Beschreibung

Die Erfindung betrifft ein Lenksystem für ein insbesondere zweispuriges Kraftfahrzeug mit einer Lenkhandhabe, einer hydraulischen Servolenkeinrichtung zum zusätzlichen Einleiten eines im Betrag variablen Servomoments in Abhängigkeit eines vorgegebenen Handmoments an dem Lenkgetriebe und einer hydraulischen Rückwirkeinrichtung zum Erzeugen eines im Betrag variablen Unterstützungsmoments zum Handmoment.

Bei heutigen Kraftfahrzeugen wird eine Vielzahl unterschiedlicher Lenksysteme verwendet. Die einfachsten dieser Lenksysteme übertragen einen von einem Fahrer an einer Lenkhandhabe in Gestalt eines Lenkrades vorgegebenen Lenkwinkel und ein vorgegebenes Handmoment ohne jegliche Kraft- oder Momenten-Unterstützung über ein Lenkgetriebe auf lenkbare Fahrzeugräder. Durchaus üblich sind heutzutage aber Lenksysteme mit einer Kraft- oder Momenten-Unterstützung bzw. Kraft- oder Momenten-Überlagerung.

Eine Momenten-Überlagerung können insbesondere elektronisch geregelte hydraulische Servolenksysteme vornehmen, bei denen mit Hilfe eines hydraulischen Servomotors an einem Lenkgetriebe des Lenksystems eine zusätzliche Servokraft eingeleitet wird. Dabei bleibt die Zuordnung zwischen dem Winkel der Lenkhandhabe und dem Winkel der Fahrzeugräder erhalten, so wie es auch bei unterstützungsfreien Lenksystemen üblich ist.

Charakteristisch für die elektronisch geregelten hydraulischen Servolenkungen ist, dass die durch den hydraulischen Servomotor bzw. eine Servolenkeinrichtung erzeugte Servokraft nicht nur eine Funktion des vom Fahrer erzeugten Handmoments ist, sondern zusätzlich von fahrdynamischen Zustandsgrößen abhängt. Zu diesen bekannten Servolenksystemen zählen Lenkungen mit variabler, beispielsweise fahrzeuggeschwindigkeitsabhängiger Betätigungskraft. Ein besonderer Vorteil dieser bekannten hydraulischen Servolenksysteme liegt darin, dass die mechanische Koppelung zwischen der Lenkhandhabe und den Fahrzeugrädern als so genannte manuelle Rückfallebene fungiert, so dass bei Ausfall der hydraulischen Servolenkeinrichtung der Fahrer das Fahrzeug weiter mit erhöhtem Kraftaufwand lenken kann.

Der Erfindung liegt die Aufgabe zugrunde ein Lenksystem der eingangs genannten Art dahingehend zu verbessern, dass einem Fahrer des Kraftfahrzeugs auf leicht verständliche und dennoch technisch einfach zu realisierende Weise angezeigt werden kann, dass von ihm eine Korrektur der Fahrzeugführung erfolgen sollte.

Ein Lenksystem gemäß dem Oberbegriff des Anspruchs 1 ist aus US 6 076 627 bekannt.

Die Aufgabe ist erfindungsgemäß mit einem Lenksystem gemäß dem Oberbegriff des Anspruchs 1 gelöst, bei dem die Rückwirkeinrichtung derart angepasst ist, dass mit ihr unabhängig von der Amplitude und Richtung des Handmoments außer einem Unterstützungsmoment auch ein Überlagerungsmoment erzeugt werden kann, welches zu einer Vergrößerung des Handmoments oder einer Umkehr der Richtung des Handmoments führt.

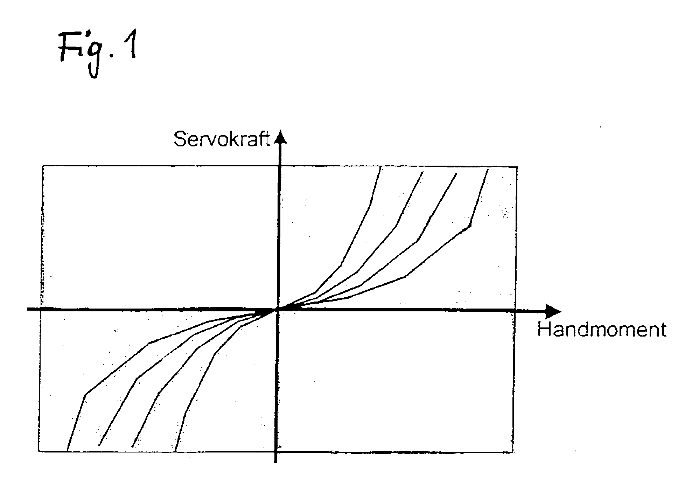

Die Erfindung baut hinsichtlich der Verbesserung eines Lenksystems grundsätzlich auf einem vergleichsweise einfachen und daher preiswerten hydraulischen Servolenksystem auf. Solche Servolenksysteme werden beispielsweise mit einem hydraulischen Drehschieber-Ventil gesteuert, das über einen Drehstab vom Lenkrad aus betätigt wird. Zusätzlich wird durch Öffnen eines elektro-hydraulischen Wandlers und durch weitere hydraulische Elemente an einem Rückwirkkolben eine Druckdifferenz erzeugt. Hierdurch wird am Drehschieber ein Drehmoment erzeugt, das zu einer Verringerung des Handmoments führt. Mit der heutigen hydraulischen Anordnung kann abhängig von der Richtung der Verdrehung des Drehschiebers am Rückwirkkolben entweder eine positive oder eine negative Druckdifferenz erzeugt werden. Es kann also ein Unterstützungsmoment zum Handmoment erzeugt werden. Dieses Unterstützungsmoment bewirkt, dass ein individuell festgelegtes Betätigungsmoment am Lenkrad erforderlich ist, bis eine bestimmte Servounterstützung erreicht wird. Mit dieser Technik können daher Unterstützungskennlinien im ersten und dritten Quadranten eines Handmomenten-Servokraft-Schaubilds (siehe Fig. 1) geregelt werden, nicht aber eine 4-Quadrantenregelung.

Eine wesentliche Neuerung der Erfindung ist darin zu sehen, dass das Rückwirkmoment auf eine Lenkhandhabe unabhängig von der Amplitude und der Richtung einer Lenkvorgabe gesteuert wird. So ist erfindungsgemäß beispielsweise das Drehschieberventil eines bekannten hydraulischen Servolenksystems derart modifiziert, dass unabhängig von der Amplitude und Richtung einer Verdrehung eines Drehschiebers an einer Steuerbuchse des Drehschieberventils außer einem Unterstützungsmoment auch ein Überlagerungsmoment erzeugt werden kann, welches zu einer Vergrößerung des Handmoments oder einer Umkehr der Drehrichtung des Handmoments führt. Hierdurch wird erreicht, dass erfindungsgemäß jedes Handmoment sowohl hinsichtlich Amplitude und Richtung beliebig verändert werden kann.

Mit der erfindungsgemäßen Veränderung des Handmomentes kann einem Fahrer des Fahrzeugs eine veränderte fahrdynamische Situation angezeigt werden. Eine solche Situation kann beispielsweise eine Tendenz zum Über- oder Untersteuern des Fahrzeugs bei Kurvenfahrt sein. Der Fahrer spürt dann z.B. ein Ausweichen des Lenkrades auf seine Lenkbewegung und wird dadurch zu einer entsprechenden Korrektur seiner Lenkbewegung gedrängt.

Darüber hinaus kann die erfindungsgemäße Erzeugung eines Überlagerungsmoments mittels einer Servolenkeinrichtung genutzt werden, um während eines Einpark- oder Ausparkvorgangs einem Fahrer eine vorteilhafte Lenkbewegung anzuzeigen.

Schließlich kann die Erfindung auch dazu beitragen, dass einem Fahrer durch Erzeugen eines Überlagerungsmoments am Lenkrad während einer Straßenfahrt eine sinnvolle Lenkrichtung angezeigt wird und dieser somit sein Fahrzeug innerhalb der zu nutzenden Fahrspur hält.

Die Erfindung schafft darüber hinaus insbesondere in Kombination mit einer Überlagerungslenkung bzw. Aktivlenkung eine volle Steer-by-Wire Funktionalität. Dabei ist es möglich, mit Hilfe der Überlagerungslenkung Radlenkwinkel fahrerunabhängig beispielsweise allein in Abhängigkeit fahrdynamischer Größen einzusteuern und gleichzeitig das Handmoment beliebig zu variieren. Umgedreht besteht die Möglichkeit, über die erfindungsgemäß vorgeschlagene Momentenregelung die Fahrzeugräder, beispielsweise zur (automatischen) Spurführung, zu lenken und ein Mitdrehen des Lenkrades aufgrund einer Bewegung der Überlagerungslenkung zu verhindern. Bei einer Kombination mit einer Überlagerungslenkung können gegebenenfalls auftretende Störmomente durch die erfindungsgemäße Momentenüberlagerung kompensiert werden.

Mit dem erfindungsgemäßen Lenksystem kann also insbesondere für Personenkraftwagen mit hoher Lenkleistung eine erheblich erhöhte Funktionalität und unter entsprechender Ausgestaltung eine volle Steer-by-Wire Funktionalität realisiert werden. Die dafür notwendige Modifikation bekannter Servolenksysteme ist vergleichsweise gering. Es sind nur geringe Zusatzkosten, geringes zusätzliches Gewicht und ein geringer zusätzlicher Packagebedarf zu erwarten. Die Erfindung kann leicht modular mit einer hydraulischen Servolenkeinrichtung sowie mit einer Überlagerungslenkung kombiniert werden, so dass ein weiterer wichtiger Baustein für einen modularen Lenksystem-Baukasten geschaffen ist.

Darüber hinaus ist das Entwicklungs- und Betriebsrisiko des erfindungsgemäßen Lenksystems vergleichsweise gering, da mit der Erfindung auf bestehende Serientechnologien zurückgegriffen werden kann.

Bei einer vorteilhaften Weiterbildung des erfindungsgemäßen Lenksystems kann das Überlagerungsmoment von der für das Erzeugen des Unterstützungsmoments vorgesehenen Einrichtung erzeugt werden. Wie oben bereits kurz erläutert worden ist, sind heutige Einrichtungen zum Erzeugen eines Unterstützungsmoments nicht in der Lage, ein erfindungsgemäßes Überlagerungsmoment zu erzeugen. Indem erfindungsgemäß eine solche Einrichtung modifiziert wird, so dass sie auch die genannten Überlagerungsmomente erzeugt, kann auf vergleichsweise kostengünstige Weise eine erheblich erhöhte Funktionalität bereitgestellt werden.

Darüber hinaus kann für die erfindungsgemäße Erzeugung von Überlagerungsmomenten auf bewährte Techniken zurückgegriffen werden, so dass insgesamt die Funktionssicherheit hoch ist.

So kann das erfindungsgemäße Überlagerungsmoment vorteilhaft von der hydraulischen Servolenkeinrichtung, insbesondere von der hydraulischen Pumpe dieser Servolenkeinrichtung erbracht werden.

Darüber hinaus kann das erfindungsgemäße Überlagerungsmoment durch Nutzung eines Differenzdrucks zwischen einem Betriebsdruck der Servolenkeinrichtung und einem Lastdruck am Lenkgetriebe vergleichsweise einfach und kostengünstig erzeugt werden.

Ferner kann an dem erfindungsgemäßen Lenksystem vorteilhaft eine hydraulische Umkehrschaltung vorgesehen sein, mit der das Unterstützungsmoment und das Überlagerungsmoment durch Umkehr der Wirkrichtung eines Aktuators erzeugt werden können. Da bei heutigen Lenksystemen mit einer elektronisch gesteuerten hydraulischen Servolenkeinrichtung in der Regel bereits ein solcher Aktuator für das Erzeugen eines Unterstützungsmoments vorhanden ist, kann dieser für die erfindungsgemäße Weiterbildung eines solchen Lenksystems genutzt und damit der Zusatzaufwand vergleichsweise gering gehalten werden.

Als Alternative für eine Umkehrschaltung kann eine hydraulische Brückenschaltung vorgesehen sein, mit der das Überlagerungsmoment durch Veränderung der Druckrichtung an einem Aktuator erzeugt werden kann.

Eine solche hydraulische Brückenschaltung kann kostengünstig mit fernsteuerbar verstellbaren Blenden gestaltet sein, mit denen dann durch eine entsprechende Steuerung der Blenden durch ein elektronisches Steuergerät wahlweise Unterstützungsmomente oder Überlagerungsmomente verschiedener Amplitude erzeugt werden können.

Die derart gestaltete hydraulische Brückenschaltung sollte insbesondere in einer hydraulischen Verbindungsleitung zwischen einer Pumpe der Servolenkeinrichtung und der Servo-Zylinder-Kolben-Anordnung am Lenkgetriebe angeordnet sein. Die Brückenschaltung wird dann mit dem von der Pumpe an das Lenkgetriebe abgegebenen Druck beaufschlagt.

Alternativ ist die erfindungsgemäße hydraulische Brückenschaltung vorteilhaft in einem Bypassweg zur hydraulischen Verbindungsleitung zwischen einer Pumpe der Servolenkeinrichtung und dem Lenkgetriebe angeordnet. In den Bypassweg und die darin angeordnete Bypassleitung kann durch eine verstellbare Blende in der Verbindungsleitung je nach Bedarf entsprechend viel oder wenig Hydraulikfluid zugeteilt werden. Es kann auch anstelle von verstellbaren Blenden teilweise mit Konstantblenden gearbeitet werden.

Es ist daher vorteilhaft, wenn in der Verbindungsleitung zwischen der Pumpe und dem Lenkgetriebe eine insbesondere fernsteuerbare, verstellbare Blende angeordnet ist. Vorteilhaft ist aber auch der vergleichsweise kostengünstige Einsatz von Konstantblenden.

Wie oben bereits erwähnt, baut die Erfindung insbesondere auf der Technik bekannter Servolenkeinrichtungen mit einem Drehschieberventil auf. Ein solches Drehschieberventil kann durch eine vergleichsweise einfache Modifikation für das erfindungsgemäße Erzeugen eines Überlagerungsmoments abgeändert werden.

Nachfolgend werden Ausführungsbeispiele erfindungsgemäßer Lenksysteme anhand der beigefügten schematischen Zeichnungen näher erläutert. Es zeigt:
Fig. 1 eine Darstellung des Verlaufs der Servokraft über dem Handmoment bei bekannten Servolenksystemen in einem 4-Quadranten-Schaubild,
Fig.2 ein vereinfachtes Schaltbild eines ersten Ausführungsbeispiels einer hydraulischen Brückenschaltung für eine Erzeugung eines Überlagerungsmoments an einem erfindungsgemäßen Lenksystem,
Fig. 3 ein vereinfachtes Schaltbild eines zweiten Ausführungsbeispiels einer hydraulischen Brückenschaltung für eine Erzeugung eines Überlagerungsmoments an einem erfindungsgemäßen Lenksystem und
Fig. 4 ein vereinfachtes Schaltbild eines dritten Ausführungsbeispiels einer hydraulischen Umkehrschaltung für eine Erzeugung eines Überlagerungsmoments an einem erfindungsgemäßen Lenksystem.

In Fig. 1 ist, wie oben bereits erwähnt, in einem 4-Quadranten-Schaubild der Verlauf der mittels einer Servolenkeinrichtung erzeugten Servokraft über dem an einer Lenkhandhabe eines zugehörigen Fahrzeugs anliegenden Handmoment dargestellt. Wie zu erkennen ist, wird von der Servolenkeinrichtung im ersten und im dritten Quadranten des Schaubildes in Abhängigkeit des je nach Drehrichtung der Lenkhandhabe positiven (1. Quadrant) oder negativen (3. Quadrant) Handmoments eine positive oder negative Servokraft erzeugt, die dann an ein nicht veranschaulichtes Lenkgetriebe und an lenkbare Fahrzeugräder übertragen wird.

Bei derartigen bekannten Servolenkeinrichtungen ist zur Steuerung der Größe der Servokraft ein Drehschieberventil bzw. Drehkolbenventil vorgesehen, das einen Drehschieber und eine diesen umgebende Steuerbuchse aufweist. Der Drehschieber wird durch Ausüben des Handmoments an der Lenkhandhabe relativ zur Steuerbuchse verdreht, wodurch verschiedene hydraulische Leitungen freigegeben und/oder verschlossen werden, so dass eine hydraulische KolbenZylindereinheit der Servolenkeinrichtung mit einem Gleichlaufzylinder an einem Lenkgetriebe entsprechend gesteuert wird.

An der Servolenkeinrichtung ist ferner ein elektrohydraulischer Wandler bzw. Steller vorgesehen, der eine hydraulische Leitung freigeben und dadurch einen Differenzdruck zwischen einer Pumpe und dem Gleichlaufzylinder auf einen Rückwirkkolben umleiten kann. Der Rückwirkkolben, der eine Rückwirkeinrichtung im Sinne dieser Erfindung darstellt, übt auf ein Kugelgewinde eine Kraft aus, aus der ein auf den Drehschieber resultierendes Moment folgt, welches als Unterstützungsmoment zur Verringerung des Handmoments beiträgt.

Mit einer derartigen bekannten Einrichtung kann, unabhängig von der Richtung der Relativbewegung zwischen Steuerbuchse und Drehschieber, lediglich jeweils ein das Handmoment maximal bis nahe Null verringerndes Unterstützungsmoment erzeugt werden - abhängig von der Richtung der Verdrehung ist entweder ein positiver oder ein negativer Differenzdruck möglich.

Das jeweilige Unterstützungsmoment bewirkt, dass ein individuell höheres Betätigungsmoment an der Lenkhandhabe erforderlich ist, bis eine bestimmte hydraulische Unterstützung erreicht wird. Damit sind je nach Stellung des elektrohydraulischen Wandlers im ersten und dritten Quadranten unterschiedliche Unterstützungskennlinien möglich, nicht aber eine 4-Quadranten-Regelung der Servo kraft.

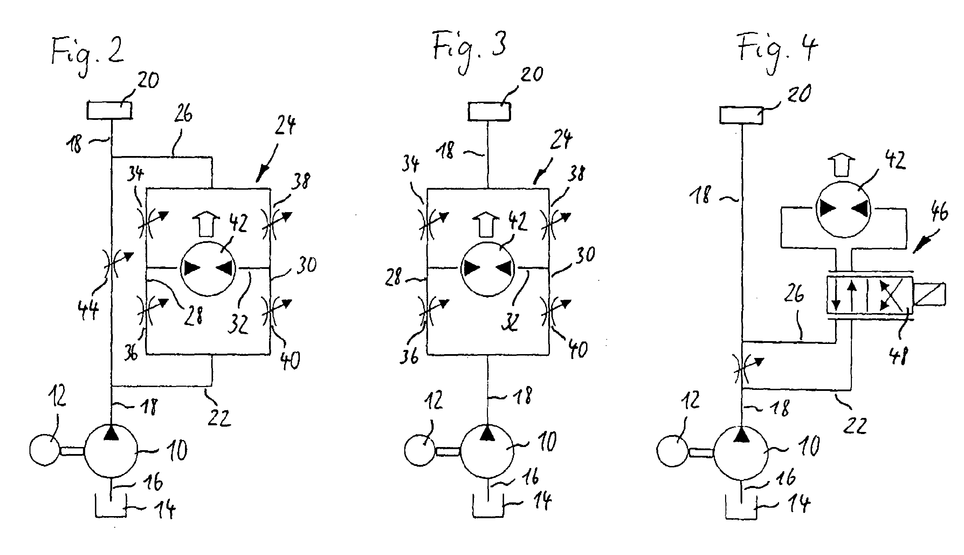

Im Gegensatz zu einem solchen bekannten Lenksystem sind in den Fig. 2 bis 4 drei bevorzugte erfindungsgemäße Ausführungsbeispiele dargestellt, bei denen unabhängig von der Amplitude und Richtung einer Relativbewegung zwischen Steuerbuchse und Drehschieber, neben einem Unterstützungsmoment auch ein Überlagerungsmoment bzw. unterstützendes Moment erzeugt werden kann, welches zu einer Vergrößerung des Handmoments oder einer Umkehr der Richtung des Handmoments führt. Die für die Erzeugung des Überlagerungsmoments notwendige hydraulische Leistung wird bei allen drei Ausführungsbeispielen von einer Servo- bzw. Lenkungspumpe 10 erbracht, die in Kombination mit dem oben genannten Lenkgetriebe und dem Gleichlaufzylinder als Servolenkeinrichtung wirkt.

Die Pumpe 10 wird bei allen Ausführungsbeispielen von einem Motor 12 in Gestalt eines Motors angetrieben und fördert während ihres Betriebs ein Hydraulikfluid aus einem Tank 14 durch eine Eingangsleitung 16 in eine Ausgangsleitung 18 hinein.

Die Ausgangsleitung 18 führt zu einem Gleichlaufzylinder 20, wobei in Strömungsrichtung vor dem Gleichlaufzylinder 20 ein nicht dargestellter Drehschieber oder eine entsprechende Ventilanordnung vorgesehen ist.

Von der Ausgangsleitung 18 zweigt eine erste Bypassleitung 22 ab, die zu einer Brückenschaltung 24 und einer nachfolgend angeordneten zweiten Bypassleitung 26 führt, die wieder in die Ausgangsleitung 18 mündet.

Die Brückenschaltung 24 ist mit einer ersten Parallelleitung 28 und einer zweiten Parallelleitung 30 gebildet, die jeweils mittig durch eine Querleitung 32 verbunden sind. Die Parallelleitungen 28 und 30 werden auf diese Weise von der Querleitung 32 in jeweils zwei Abschnitte unterteilt, in denen sich jeweils eine Blende 34, 36, 38 bzw. 40 befindet. Die Blenden 34 bis 40 sind in ihrem Blendenquerschnitt veränderbar und über nicht dargestellte elektromagnetische Einrichtungen von einem ebenfalls nicht dargestellten Steuergerät fernsteuerbar.

In der Querleitung 32 ist ein Aktuator 42 in Gestalt eines Hydraulikmotors zwischengeschaltet, dem durch entsprechendes Öffnen und schließen der Blenden 34 bis 40 Hydraulikfluid zugeteilt werden kann, wobei das Hydraulikfluid in zwei entgegengesetzten Strömungsrichtungen durch den Aktuator 42 geleitet werden kann, so dass dieser in zwei entgegengesetzte Drehrichtungen Drehmomente erzeugen kann. Die Drehmomente des Aktuators 42 werden über einen nicht dargestellten Mechanismus an ein Lenkrad eines zugehörigen Fahrzeugs übertragen und bilden dort entsprechend Überlagerungsmomente zu einem am Lenkrad von einem Fahrer aufgebrachten Handmoment.

Bei dem Ausführungsbeispiel gemäß Fig. 2 ist ferner in der Ausgangsleitung 18 zwischen den Anschlüssen der ersten und der zweiten Bypassleitung 22 bzw. 26 eine fünfte Blende 44 angeordnet, mittels der die Ausgangsleitung 18 fernsteuerbar gedrosselt oder verschlossen werden kann, so dass das Hydraulikfluid aus der Ausgangsleitung 18 in die erste Bypassleitung 22 und die Brückenschaltung 24 umgeleitet wird.

In Fig. 3 ist ein Ausführungsbeispiel veranschaulicht, das hinsichtlich der Brückenschaltung 24 und der darin angeordneten Blenden 34 bis 40 sowie dem Aktuator 42 der Anordnung gemäß Fig. 2 entspricht. Die Brückenschaltung 24 der Fig. 3 ist jedoch nicht in einer Bypassleitung sondern unmittelbar in der Ausgangsleitung 18 angeordnet. Auch bei dieser Ausgestaltung der erfindungsgemäßen Lösung wird mit Hilfe der fernsteuerbaren Blenden 34 bis 40 dem Aktuator 42 Hydraulikfluid in zwei entgegengesetzten Richtungen zugeteilt, so dass dieser wahlweise verschieden hohe und verschieden gerichtete Überlagerungsmomente erzeugen kann.

In Fig. 4 ist ein Ausführungsbeispiel dargestellt, bei dem anstelle der in Fig. 1 dargestellten Brückenschaltung 24 an der Ausgangsleitung 18 eine Umkehrschaltung 46 angeschlossen ist. Die Umkehrschaltung 46 weist als wesentliches Bauelement ein 2-Stellungs-2-Wege-Ventil 48 auf, mittels dem wiederum Hydraulikfluid in zwei entgegen gesetzten Strömungs- bzw. Druckrichtungen zum Aktuator 42 geleitet werden kann.

### Bezugszeichenliste:

- 10: Pumpe
- 12: Motor
- 14: Tank
- 16: Eingangsleitung
- 18: Ausgangsleitung
- 20: Gleichlaufzylinder
- 22: erste Bypassleitung
- 24: Brückenschaltung
- 26: zweite Bypassleitung
- 28: erste Parallelleitung
- 30: zweite Parallelleitung
- 32: Querleitung
- 34: erste Blende
- 36: zweite Blende
- 38: dritte Blende
- 40: vierte Blende
- 42: Aktuator
- 44: fünfte Blende
- 46: Umkehrschaltung
- 48: Ventil

## Patentansprüche

1. Lenksystem für ein insbesondere zweispuriges Kraftfahrzeug mit mechanischer Kopplung zwischen einer Lenkhandhabe und den lenkbaren Fahrzeugrädern, mit einer hydraulischen Servolenkeinrichtung (10, 20) zum zusätzlichen Einleiten eines im Betrag variablen Servo-Moments in Abhängigkeit eines an der Lenkhandhabe vorgegebenen Handmoments an dem Lenkgetriebe und einer hydraulischen Rückwirkeinrichtung (22-48) zum Erzeugen eines im Betrag variablen Unterstützungsmoments zum Handmoment, wobei die Rückwirkeinrichtung (22-48) derart angepasst ist, dass mit ihr unabhängig von der Amplitude und Richtung des Handmoments außer einem Unterstützungsmoment auch ein Überlagerungsmoment zum Handmoment erzeugt werden kann, welches zu einer Vergrößerung des Handmoments oder einer Umkehr der Richtung des Handmoments führt, wobei das Überlagerungsmoment von der Servolenkeinrichtung (10, 20), insbesondere von einer hydraulischen Pumpe (10) dieser Servolenkeinrichtung (10, 20), mittels eines Aktuators (42) erbracht wird,
**dadurch gekennzeichnet, dass** eine hydraulische Umkehrschaltung (46) vorgesehen ist, mit der das Überlagerungsmoment durch Umkehr der Wirkrichtung des Aktuators (42) erzeugt werden kann, oder dass eine hydraulische Brückenschaltung (24) vorgesehen ist, mit der das Überlagerungsmoment durch Veränderung der Druckrichtung am Aktuator (42) erzeugt werden kann.

2. Lenksystem nach Anspruch 1,
**dadurch gekennzeichnet, dass** die hydraulische Brückenschaltung (24) mit fernsteuerbar verstellbaren Blenden (34-40) versehen ist, mit denen wahlweise Überlagerungsmomente verschiedener Amplitude erzeugt werden können.

3. Lenksystem nach Anspruch 1 oder 2,
**dadurch gekennzeichnet, dass** die hydraulische Brückenschaltung (24) in einer hydraulischen Verbindungsleitung (18) zwischen einer Pumpe (10) der Servolenkeinrichtung und dem Lenkgetriebe angeordnet ist.

4. Lenksystem nach Anspruch 1 oder 2,
**dadurch gekennzeichnet, dass** die hydraulische Brückenschaltung (24) in einem Bypassweg (22, 26) zur hydraulischen Verbindungsleitung (18) zwischen einer Pumpe (10) der Servolenkeinrichtung und dem Lenkgetriebe angeordnet ist.

5. Lenksystem nach Anspruch 4,
**dadurch gekennzeichnet, dass** in der Verbindungsleitung (18) zwischen der Pumpe (10) und dem Lenkgetriebe mindestens eine unverstellbare und/oder eine fernsteuerbare, verstellbare Blende (44) angeordnet ist.

6. Lenksystem nach einem der Ansprüche 1 bis 5,
**dadurch gekennzeichnet, dass** das Überlagerungsmoment von einem modifizierten Drehschieberventil einer Servolenkeinrichtung erzeugt werden kann.

## Claims

1. A steering system for a, more especially, two-track motor vehicle with mechanical coupling between a steering handle and the steerable vehicle wheels, comprising a hydraulic power assisted steering device (10, 20) for the additional introduction of a variable-amount power assisted torque as a function of a manual torque specified at the steering handle at the steering gear and a hydraulic reaction device (22-48) for generating a variable-amount assistance torque for the manual torque, wherein the reaction device (22-48) is adapted in such a way that, regardless of the amplitude and direction of the manual torque, apart from an assistance torque, an overlay torque to the manual torque can also be generated therewith, which leads to an increase in the manual torque or a reversal in the direction of the manual torque, the overlay torque being produced by the power assisted steering device (10, 20), more especially by a hydraulic pump (10) of this power assisted steering device (10, 20), by means of an actuator (42), **characterised in that** a hydraulic inverter circuit (46) is provided, with which the overlay torque can be generated by reversal of the direction of action of the actuator (42), or **in that** a hydraulic bridge circuit (24) is provided, with which the overlay torque can be generated by changing the pressure direction at the actuator (42).

2. A steering system according to claim 1, **characterised in that** the hydraulic bridge circuit (24) is provided with remotely controllable adjustable screens (34-40), with which overlay torques of various amplitudes can be selectively generated.

3. A steering system according to claim 1 or 2, **characterised in that** the hydraulic bridge circuit (24) is arranged in a hydraulic connection line (18) between a pump (10) of the power assisted steering device and the steering gear.

4. A steering system according to claim 1 or 2, **characterised in that** the hydraulic bridge circuit (24) is arranged in a bypass path (22, 26) to the hydraulic connection line (18) between a pump (10) of the power assisted steering device and the steering gear.

5. A steering system according to claim 4, **characterised in that** at least one non-adjustable and/or a remotely controllable, adjustable screen (44) is arranged in the connection line (18) between the pump (10) and the steering gear.

6. A steering system according to any one of claims 1 or 5, **characterised in that** the overlay torque can be generated by a modified rotary slide valve of a power assisted steering device.

## Revendications

1. Système de direction pour un véhicule automobile, en particulier à quatre roues, avec un couplage mécanique entre un volant de direction et les roues directrices du véhicule, avec un dispositif de direction assistée hydraulique (10, 20) pour l'introduction additionnelle d'un couple d'assistance de valeur variable en fonction d'un couple manuel prédéterminé à l'engrenage de direction, et un dispositif de rétroaction hydraulique (22-48) pour produire un couple de soutien de valeur variable au couple manuel, le dispositif de rétroaction (22-48) étant adapté de telle manière qu'il puisse également produire outre un couple de soutien et indépendamment de l'amplitude et de la direction du couple manuel, un couple de superposition au couple manuel, qui conduit à une augmentation du couple manuel ou à une inversion de la direction du couple manuel, le couple de superposition étant fourni par le dispositif de direction assistée (10, 20), en particulier par une pompe hydraulique (10) de ce dispositif de direction assistée (10, 20), au moyen d'un actionneur (42),
**caractérisé en ce qu'**
il est prévu un circuit d'inversion hydraulique (46), avec lequel le couple de superposition peut être produit par inversion de la direction d'action de l'actionneur (42), ou un circuit en pont (24), avec lequel le couple de superposition peut être produit par changement de la direction de pression à l'actionneur (42).

2. Système de direction selon la revendication 1,
**caractérisé en ce que**
le circuit en pont hydraulique (24) est muni de diaphragmes (34-40) réglables par télécommande, avec lesquels on peut produire au choix des couples de superposition d'amplitude différente.

3. Système de direction selon la revendication 1 ou 2,
**caractérisé en ce que**
le circuit en pont hydraulique (24) est disposé dans une conduite de raccordement hydraulique (18) entre une pompe (10) du dispositif de direction assistée et l'engrenage de direction.

4. Système de direction selon la revendication 1 ou 2,
**caractérisé en ce que**
le circuit en pont hydraulique (24) est disposé dans un trajet de dérivation (22, 26) à la conduite de raccordement hydraulique (18) entre une pompe (10) du dispositif de direction assistée et l'engrenage de direction.

5. Système de direction selon la revendication 4,
**caractérisé en ce qu'**
au moins un diaphragme non réglable et/ou un diaphragme réglable par télécommande (44) est disposé dans la conduite de raccordement (18) entre la pompe (10) et l'engrenage de direction.

6. Système de direction selon l'une quelconque des revendications 1 à 5,
**caractérisé en ce que**
le couple de superposition peut être produit par une vanne à tiroir rotatif modifiée d'un dispositif de direction assistée.
